Europäisches Patentamt

European Patent Office

Office européen des brevets

(19)

(11) Publication number: **0 037 250**
A2

(12) **EUROPEAN PATENT APPLICATION**

(21) Application number: **81301293.7**

(22) Date of filing: **26.03.81**

(51) Int. Cl.³: **C 14 C 3/20**
**C 08 G 8/18, C 08 G 8/28**

(30) Priority: **02.04.80 GB 8011011**

(43) Date of publication of application:
**07.10.81 Bulletin 81/40**

(84) Designated Contracting States:
**BE CH DE FR GB IT LI NL SE**

(71) Applicant: **BP Chemicals Limited**
**Britannic House Moor Lane**
**London, EC2Y 9BU(GB)**

(72) Inventor: **Currie, Andrew Christopher**
**BP CHemicals Limited Hayes Road Sully**
**Penarth South Glamorgan CF6 2YU Wales(GB)**

(72) Inventor: **Yeomans, Bertram**
**BP Chemicals Limited Saltend Hedon**
**Hull HU12 8DS(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) Synthetic tanning agents and process for their production.

(57) This invention relates to a process for producing syntans from a phenolic material rich in ortho- and para- substituted alkyl phenols. The alkyl phenols are subjected to sulphonation and condensation reaction with formaldehyde to produce a synthetic sulphonated resin. It has been found that the phenolic material used produces a sulphonated resin which is superior in solubility and colour to those conventionally produced from alkyl phenols rich in the meta- isomer. The process also enables the use of a crude alkylate from phenol directly without any purification without adversely affecting the quality of the resin.

EP 0 037 250 A2

0037250

1
## SYNTHETIC TANNING AGENTS AND PROCESS FOR THEIR PRODUCTION

The present invention relates to synthetic tanning agents and to a process for their production.

In the past the usual method of producing leather involved treating raw animal hides with aqueous solutions of natural vegetable-based materials containing phenolic groups, e.g. tannin, tannic acid, etc., which not only remove hairs from the hide but are also believed to react with collagen and other proteins present in the hide and prevent biodegradation thereof.

More recently synthetic tanning agents (sometimes known as syntans) have been developed.  These are particularly useful for the production of heavy duty and speciality leathers as the final product is more resilient and certain surface effects can be incorporated which can facilitate leather processing e.g. water proofing.  The  syntans also act as softening and filling agents which improve  the dyeing characteristics of the leather and also have a partial bleaching effect.  Commercial syntans have hitherto been made from synthetic sulphonated resins derived by condensation reaction of a cresol/phenol mixture with formaldehyde and the condensation product is then sulphonated.  An alternative is to conduct the sulphonation of the cresol/phenol mixture first, followed by condensation reaction with formaldehyde to form the intermediate synthetic sulphonated resin.  This intermediate is then further reacted with urea/formaldehyde after which the resultant product is reacted with an alkali hydroxide to form a salt.  The salt is then spray dried to a powder form which is used in the  tanning process.

Industry has hitherto preferred to use for this purpose a  crude meta-cresol  product derived from coal-tar.  However, the supply of suitable cresols for producing syntans has diminished as a result of the decline in the coal-tar industry and alternative phenolic sources have been sought to replace cresols. One potential alternative feedstock is an isomeric mixture of alkyl phenols which is enriched in the meta-isomer. Such a meta-enriched isomeric mixture can be prepared by alkylation of phenol at high temperature or by isomerisation of a low temperature alkylation product which is relatively rich in the ortho-isomer. It is known that the isomerisation of the alkylation product gives rise to a mixture enriched in the meta-isomer chiefly at the expense of the ortho-isomer in the alkylation product because the concentration of the para-isomer remains virtually unchanged during the isomerisation step.

The reason for the preferred use of an isomeric mixture of phenols enriched in the meta-isomer lies partially in the method of making such syntans outlined above. It is believed that the free ortho-position in a phenolic mixture enriched in the meta-isomer facilitates the introduction of methylene groups in that position during condensation of the phenolic mixture with formaldehyde to form a resin, whether such a condensation reaction is preceded or followed by a sulphonation step. On the basis of the classical theory of the mechanism of substitution reactions of an aromatic nucleus such a belief is fully justified.

It has however been found that in addition to the rigorous reaction conditions required for producing an isomeric mixture of alkyl phenols which is enriched in the meta-isomer, such isomeric mixtures when used in syntans present other problems. For example, if the meta-enriched isomer is first condensed with formaldehyde and the resin thus formed subsequently sulphonated it has been found that the sulphonated product has a deep purple colour. Moreover, if the alkyl phenol is first sulphonated and the sulphonated product is then condensed with formaldehyde, it has been found that the sulphonated product is not completely soluble in water and an oily dispersion is formed which may be due to incomplete sulphonation. The problems of solubility in water and the purple colour associated with syntans produced from an isomeric mixture of alkyl phenols enriched in the meta-isomer are undesirable because the final syntans need to be water soluble and relatively colourless in order to meet the requirements of the tanning industry.

It is an object of the present invention to produce a mixture of isomeric alkyl phenols which does not exhibit the problems of solubility and colour associated with mixtures enriched in the meta-isomer without using rigorous reaction conditions to produce the same.

Accordingly, the present invention is a process for the production of syntans from a phenolic material containing at least 5% by weight of a mixture of isomeric mono-alkyl and/or dialkyl phenols in which the alkyl groups contain 3 or 4 carbon atoms, said process comprising subjecting said phenolic material to the steps of sulphonation and condensation reaction with formaldehyde in either order to make a synthetic sulphonated resin, characterised in that the alkylphenols in the isomeric mixture have at least 90% w/w of the alkyl group(s) in the ortho- and/or para-positions and less than 5% w/w of the alkyl groups in the meta-positions.

The phenolic material suitably contains at least 30% w/w of the isomeric mixture of mono- and di-alkyl phenols. The amount of mono-alkyl phenols in the isomeric mixture is suitably above 60% by weight, preferably between 65 and 75% w/w. In the isomeric mixture, the amount of meta-mono alkyl phenol is preferably less than 3% w/w and the total meta- substituted mono- alkyl and di-alkyl phenol content is preferably less than 3.5% w/w.

The alkyl groups in the mixture of isomeric mono- and/or dialkyl phenol constituent of the phenolic material have 3 or 4 carbon atoms and are preferably isopropyl phenol or secondary butyl phenol.

The phenolic material for use in the present invention may be produced by alkylating phenol. Methods of alkylating phenol to a mixture of isomeric alkyl phenols using a Friedel-Crafts catalyst, for example aluminium chloride, ferric chloride, zinc chloride, boron trifluoride, sulphuric acid, phosphoric acid, hydrogen fluoride and the like, will be readily apparent to those skilled in the art. Some of these methods are described for instance in British Patent Specification No: 1265152 and US Patent Specification No: 4138591. A particularly suitable process for making a phenolic material which contains phenol and an isomeric mixture of mono- and di-alkyl phenols is to react phenol with less than a molar equivalent, suitably 0.75 molar equivalent, of the olefin corresponding to the alkyl group desired, e.g. propylene, in the presence of 0.1 to 2% w/w of a Bronsted or Lewis acid alkylation catalyst. The alkylation is carried out at a temperature between 50 and 160°C for a time sufficient to give a molar conversion of between 10 and 90% of the phenol to a mixture of isomeric mono- and dialkyl phenols. The relevant conversion time is suitably between 1 and 10 hours. The catalyst used is preferably sulphuric acid on a montmorillonite clay support. Where, for example, propylene is used for alkylation of phenol, the alkylation reaction product usually contains approximately 30% w/w of phenol, about 45% w/w of mono- isopropyl phenol and about 25% w/w of di- and tri- isopropyl phenol. The content of isomeric isopropyl phenols with an ortho-/para substituent in the final alkylation product is greater than 90% by weight of the total alkyl phenols.

The alkylation product may be used directly without any separation or further treatment for the production of the synthetic sulphonated resin, used as an intermediate for the syntans. However it may, if desired, be diluted with phenol.

The process for the production of the synthetic sulphonated resin is conventional, apart from the phenolic material used. Suitable methods for making the synthetic sulphonated resin are well known to those skilled in the art. Thus the sulphonation process can be carried out using 98% sulphuric acid at 100°C for about 1 hour. The resulting product is then partially condensed with formaldehyde under conditions such as to increase the molecular weight of the product.

The syntans produced using the intermediate synthetic sulphonated resin derived from the phenolic material of the present invention are adequately soluble in water and have only a faint yellow colour in aqueous solution.

The present invention is further illustrated with reference to the following examples.

Example

The phenolic material used to produce a synthetic sulphonated resin, which is the intermediate for the syntan, was obtained as follows:

Phenol and 0.3% w/w of a montmorillonite clay impregnated with 5% w/w sulphuric acid were charged into a reactor and the mixture was heated whilst stirring to 140°C under nitrogen cover. Propylene gas was fed into the reactor. The reaction was exothermic and the temperature rose to 145°C and was maintained at this temperature over the reaction period. When the addition of propylene was complete (0.75 moles/mole of phenol), the reaction was allowed to cool to 80°C under nitrogen cover and the phenolic material formed filtered and separated by vacuum filtration. The phenolic material recovered had the following composition on analysis by liquid chromatography:

Table I

| COMPONENT | % w/w |
|---|---|
| Phenol | 30.5 |
| o-Isopropyl phenol | 33.4 |
| m-Isopropyl phenol | 1.8 |
| p-Isopropyl phenol | 10.2 |
| 2,4-Diisopropyl phenol | 12.2 |
| 3,5-Diisopropyl phenol | 0.1 |
| 2,5-Diisopropyl phenol | 0.3 |
| 2,6-Diisopropyl phenol | 7.0 |
| 2,4,6-Triisopropyl phenol) Isopropyl phenyl ether ) | 0.5 |
| Unknown alkyl phenols (2) | 4.1 |
| % water content (Karl Fischer) | 0.03 |

The synthetic sulphonated resin was produced by a condensation reaction between paraformaldehyde (1 mole) and the phenolic material (Table I, 2.8 moles) at 120° to 140°C over 1 hour using 0.1% w/w zinc dust and 0.1% w/w of sulphuric acid catalyst and the condensation reaction product was subsequently treated with an equal weight of 98% w/w sulphuric acid which was added at about 95°C over about 1 hour.

Typically, the composition of the meta-isomer enriched phenolic material derived from the composition of the phenolic material in Table I is given below in Table II:

Table II

| COMPONENT | % w/w |
|---|---|
| Phenol | 30.7 |
| o-Isopropyl phenol | 7.9 |
| m-Isopropyl phenol | 29.1 |
| p-Isopropyl phenol | 12.8 |
| 2,4-Diisopropyl phenol | 7.1 |
| 3,5-Diisopropyl phenol | 5.5 |
| 2,6-Diisopropyl phenol | 1.0 |
| Isopropyl phenyl ether ) | 0.8 |
| 2,4,6-Triisopropyl phenol ) | |
| Unknown alkyl phenols (3) | 5.2 |
| Water content (Karl Fischer) | 0.2 |

Similarly, phenolic material of substantially similar composition but made in different batches or from other sources was converted into synthetic sulphonated resins. In each case a solution of the sulphonated resin in water (0.5% w/w) was used for colour determination. The colour determination was carried out by comparing with standard colour filters using a Lovibond Tintometer. The results are tabulated in Table III. Included in Table III, for the purposes of comparison, are the results obtained by using an isomerised meta-enriched phenolic material, the isomerisation having been carried out in each case by heating the original phenolic material with a larger amount of the alkylation catalyst (2-10% w/w of sulphuric acid on montmorillonite clay) and at a higher temperature, i.e. 190°C for six hours.

Table III

| Example | Phenol Used | | Synthetic Sulphonated Resin Intermediate | | | | |
|---|---|---|---|---|---|---|---|
| | | | | Colour Test | | | Solubility in 10 volumes of water |
| | Type | Colour in Hazen Units | Observed | Determined (units/2.5cm cell) | | | |
| | | | | Red | Blue | Yellow | |
| 1 | Ortho-isomer rich IPP | 200 | Brown | 1.1 | – | 1.0. | clear |
| 2 | " " " " | 250 | " | 1.2 | – | 2.0 | " |
| 3 | " " " " | 5 | " | 1.3 | – | 2.1 | " |
| C | Meta-isomer rich IPP | 200 | Purple | 20 | 4 | – | Oily Dispersion |
| C | " " " " | 250 | " | 13 | 3.2 | – | " |
| C | " " " " | 5 | " | 8.4 | 2 | – | " |

IPP  –  Isopropyl phenol

C    –  Comparative Test not according to the invention.

0037250

Claims:

1. A process for the production of syntans from a phenolic material containing at least 5% w/w of a mixture of isomeric mono-alkyl and/or dialkyl phenols in which the alkyl groups contain 3 or 4 carbon atoms, said process comprising subjecting said phenolic material to the steps of sulphonation and condensation reaction with formaldehyde in either order to make a synthetic sulphonated resin, characterised in that the alkyl phenols in the isomeric mixture have at least 90% w/w of the alkyl group(s) in the ortho- and/or para- positions and less than 5% w/w of the alkyl groups in the meta-position.

2. A process according to claim 1 wherein the phenolic material contains at least 30% w/w of the isomeric mixture of mono- and di-alkyl phenols.

3. A process according to claim 1 or 2 wherein the amount of monoalkyl phenols in the isomeric mixture is at least 60% by weight.

4. A process according to any one of the preceding claims wherein the amount of meta- mono alkyl phenol in the isomeric mixture is less than 3% by weight.

5. A process according to any one of the preceding claims wherein the alkyl group in the isomeric mixture of alkyl phenols is selected from an isopropyl group and a secondary butyl group.

6. A process according to any one of the preceding claims wherein the isomeric mixture of alkyl phenols is the crude catalytic alkylation product of phenol with a $C_3$ to $C_4$ olefin.

7. A process according to claim 6 wherein the alkylation catalyst is a Brönsted or Lewis acid catalyst and the alkylation is carried out at a temperature between 50 and 160°C for a time sufficient to give between 10 and 90% molar conversion of phenol.